# EUROPÄISCHE PATENTANMELDUNG

(11) **EP 3 081 957 A1**
(43) Veröffentlichungstag der Anmeldung: **19.10.2016**
(21) Anmeldenummer: 16164977.7
(22) Anmeldetag: 12.04.2016
(51) Int. Cl.: G01S 7/481, G01S 17/42

(54) **SENSORVORRICHTUNG MIT OPTOELEKTRONISCHEM SENSOR UND MESSBEREICHSERWEITERUNG**

(30) Priorität: 13.04.2015 DE 102015105560
(71) Anmelder: Helmut-Schmidt-Universität, 22043 Hamburg (DE); Hamburg Innovation GmbH, 21079 Hamburg (DE)
(72) Erfinder: Seeland, Felix, 37130 Gleichen (DE); Frick, Klaus, 21465 Reinbek (DE); Alpen, Mirco, 22117 Hamburg (DE); Horn, Joachim, 22143 Hamburg (DE)
(74) Vertreter: RGTH

(57) **Zusammenfassung**

Um eine Sensorvorrichtung (100) mit einem optoelektronischen Sensor (10) für eine dreidimensionale Raumerfassung derart weiter zu verbessern, dass die Sensorvorrichtung (100) für die Verwendung im Flugbetrieb verwendet werden kann, wird vorgeschlagen, dass zusätzlich zu einer ersten Ablenkeinheit (13) eine zweite Ablenkeinheit (14) feststehend sowie hinter der ersten Ablenkeinheit (13) derart angeordnet ist, dass der von der ersten Ablenkeinheit (13) abgelenkte Messstrahl (12a) zumindest bereichsweise auf die zweite Ablenkeinheit (14) trifft und von dieser entlang einer zweiten Messfläche (16) abgelenkt wird.

## Beschreibung

Die Erfindung betrifft eine Sensorvorrichtung mit einem optoelektronischen Sensor, wobei der optoelektronische Sensor eine Lichtquelle zur Erzeugung eines Lichtstrahls sowie eine erste Ablenkeinheit zur Ablenkung des Messstrahls entlang einer ersten Messfläche aufweist und wobei zur Erweiterung eines Messbereichs die Sensorvorrichtung eine zweite Ablenkeinheit aufweist.

In unbekannter Umgebung und im autonomen Betrieb ist ein mobiler Roboter zur Anpassung seiner Navigation auf sensorische Wahrnehmung angewiesen. Typischerweise ist bei der Umsetzung eine Balance zwischen Quantität und Qualität der Messdaten und deren Verarbeitung anzustreben. Bei der Erkundung einer unbekannten Umgebung ist die kartografische Erfassung eine typische Aufgabe. Dies kann beispielsweise mit kleineren autonom agierenden Flugplattformen durchgeführt werden.

Die Realisierung ist dabei durch verschiedene Randbedingungen begrenzt. Eine Anwendung in autonomen Robotersystemen stellt hohe Anforderungen an die Zuverlässigkeit der Verfahren und Algorithmen. Um eine echtzeitfähige Funktion sicherzustellen, ist das Zusammenwirken zwischen den einzelnen Hardware-Komponenten besonders zu berücksichtigen. Im Hinblick auf die Verarbeitung der Daten ergibt sich vor allem eine Begrenzung in der Quantität. Demgegenüber ist jedoch zu gewährleisten, dass die bereitgestellten Daten eine hinreichende Qualität zur weiteren Verarbeitung bzw. Auswertung aufweisen, insbesondere falls diese für die Navigation verwertet werden sollen. Für eine Anwendung im Flugbetrieb sind ferner gewichtssparende Konstruktionen erwünscht. Um Störeinflüsse gering zu halten, sollten diese Konstruktionen darüber hinaus möglichst unempfindlich gegenüber auftretenden Vibrationen sein.

Für die Erfassung derartiger Messdaten werden im Stand der Technik bekannte optoelektronische Sensoren, beispielsweise Laserscanner, verwendet. Bekannte Laserscanner verfügen über eine oder mehrere Laserdioden, die Licht im nicht sichtbaren Bereich emittiert bzw. emittieren. Der Lichtstrahl bzw. Messstrahl fällt auf einen abgewinkelten, beispielsweise um 45 Grad abgewinkelten, rotierenden Spiegel. Mittels dieses rotierbaren Spiegels wird der Messstrahl abgelenkt und tritt aus dem Laserscanner aus. Mittels des rotierbaren Spiegels kann bei im Stand der Technik bekannten Laserscannern mit einer einzigen Laserdiode ein Scanbereich auf einer einzigen Fläche, beispielsweise Ebene, abgetastet bzw. erfasst werden. Der aus dem Laserscanner austretende Messstrahl trifft auf Objekte im Messbereich bzw. in der Messumgebung und wird von diesen Objekten bzw. Hindernissen zumindest teilweise reflektiert. Der reflektierte Lichtstrahl bzw. reflektierte Messstrahl wird mittels eines Lichtempfängers, beispielsweise Sensors, von dem Laserscanner erfasst und ausgewertet. Dabei erhält man durch Laufzeit- und/oder Phasendifferenzmessungen Informationen über die Entfernung der Objekte bzw. Hindernisse.

Basierend auf diesem bekannten Prinzip werden Messdaten entlang bzw. auf einer einzigen Fläche erfasst und ausgewertet. Um basierend auf diesem Messprinzip ausreichend Daten für eine dreidimensionale Rekonstruktion einer Umgebung zu erhalten, sind sehr viele Messungen erforderlich. Dabei muss die Umgebung in unterschiedlichen Höhen gescannt und hierfür der Laserscanner in seiner Lage verändert werden. Das macht die Erstellung eines dreidimensionalen Umgebungsmodells zum einen sehr zeitaufwendig und führt zum anderen aufgrund der erforderlichen Lageänderung des Laserscanners zu einem komplexen mechanischen Aufbau.

Um eine Messbereichserweiterung eines Laserscanners für eine dreidimensionale Erfassung der Umgebung bereitzustellen, wird im Stand der Technik üblicherweise die Anzahl der Laserdioden erhöht. Derartige Laserscanner weisen somit mehrere Laserdioden auf, die durch einen oder mehrere rotierende Spiegel abgelenkt werden. Durch relativ aufwendige Codierung der Messstrahlen und eine präzise Positionsmessung des Spiegels wird die Parallelmessung mit mehreren Laserdioden ermöglicht. Bei diesem Messprinzip werden zusätzlich zur originären Fläche weitere Flächen aufgespannt. Die Anzahl der Flächen ist dabei abhängig von der Anzahl der verwendeten Laserdioden.

Eine derartige Messbereichserweiterung mittels zusätzlicher Laserdioden und gegebenenfalls zusätzlicher rotierender Spiegel führt einerseits zu einem erhöhten Energiebedarf und andererseits zu hohen Anforderungen in der Positionierung des bzw. der Spiegel.

Dadurch, dass bei einer derartigen Realisierung einer Messbereichserweiterung leicht zueinander geneigte Messflächen realisiert werden, können bei einem Flugbetrieb keine Informationen über das Bodenprofil gesammelt werden. Hierzu wären mehrere Lichtempfänger, beispielsweise Sensoren, erforderlich.

### Stand der Technik

In der EP 2 447 733 A1 wird beispielsweise ein optoelektronischer Sensor, insbesondere Laserscanner, mit einem Lichtsensor zum Aussenden eines Lichtstrahls in eine Überwachungsebene beschrieben. Hierbei sind zwei Ablenkeinheiten, insbesondere Spiegel, vorgesehen, wobei die zweite Ablenkeinheit drehbar und vorzugsweise verkippbar angeordnet ist.

### Darstellung der Erfindung: Aufgabe, Lösung, Vorteile

Aufgabe der vorliegenden Erfindung ist es, eine Sensorvorrichtung mit optoelektronischem Sensor für eine dreidimensionale Raumerfassung bereitzustellen, welche für die Verwendung im Flugbetrieb geeignet ist und somit eine besonders leichte Bauweise aufweist und mechanische Einflüsse, wie beispielsweise eine Übertragung von Motorschwingungen auf die Sensoreinheit, minimiert werden.

Hierfür wird erfindungsgemäß eine Sensorvorrichtung mit einem optoelektronischen Sensor vorgeschlagen. Der optoelektronische Sensor weist eine Lichtquelle zur Erzeugung eines Messstrahls sowie eine erste Ablenkeinheit zur Ablenkung des Messstrahls entlang einer ersten Messfläche auf. Zur Erweiterung des Messbereichs der Sensorvorrichtung weist die Sensorvorrichtung ferner eine zweite Ablenkeinheit auf.

Erfindungsgemäß ist die zweite Ablenkeinheit feststehend und somit nicht beweglich, insbesondere nicht rotierbar oder kippbar, an oder in der Sensorvorrichtung angeordnet. Des Weiteren ist die zweite Ablenkeinheit erfindungsgemäß hinter der ersten Ablenkeinheit angeordnet. Hierunter ist zu verstehen, dass der von der Lichtquelle erzeugte Messstrahl auf die erste Ablenkeinheit trifft, von dieser abgelenkt wird und anschließend zumindest bereichsweise auf die zweite Ablenkeinheit trifft. Dabei ist die zweite Ablenkeinheit erfindungsgemäß derart ausgebildet, dass durch diese der Messstrahl entlang einer zweiten Messfläche abgelenkt wird.

Der optoelektronische Sensor ist vorzugsweise als Laserscanner ausgebildet. Somit ist die Lichtquelle bevorzugterweise als Laserdiode ausgebildet. Die erste Ablenkeinheit ist vorzugsweise als rotierender Spiegel, beispielsweise Drehspiegel, ausgebildet. Hierunter ist zu verstehen, dass die erste Ablenkeinheit bzw. der rotierende Spiegel um eine Achse rotierbar angeordnet ist. Hierdurch können Messstrahlimpulse entlang bzw. auf der ersten Messfläche, vorzugsweise Messebene, ausgestrahlt werden. Beispielsweise kann auf der ersten Messebene somit ein relativ großer Scanwinkel bzw. Öffnungswinkel des optoelektronischen Sensors erreicht bzw. eingespannt werden. Beispielsweise kann der Scanwinkel bzw. Öffnungswinkel mehr als 180 Grad, besonders bevorzugterweise ca. 270 Grad aufweisen.

Unter "erster Ablenkeinheit" des optoelektronischen Sensors ist nicht zu verstehen, dass der optoelektronische Sensor nicht noch weitere Ablenkeinheiten aufweisen kann. Zusätzlich zur ersten Ablenkeinheit könnte der optoelektronische Sensor auch bereits vor der ersten Ablenkeinheit eine weitere Ablenkeinheit aufweisen. Derart weitere Ablenkeinheiten können feststehend oder beweglich, beispielsweise rotierbar, im optoelektronischen Sensor angeordnet sein.

Unter feststehender Anordnung der zweiten Ablenkeinheit ist zu verstehen, dass diese nicht beweglich, insbesondere nicht rotierbar oder kippbar, in der Sensorvorrichtung angeordnet ist. Somit ist die zweite Ablenkeinheit statisch in oder an der Sensorvorrichtung angeordnet.

Die zweite Messfläche steht vorzugsweise in einem Winkel zur ersten Messfläche, wobei der Winkel größer als 0 Grad ist. Durch die Messung entlang der ersten Messfläche werden Messdaten entlang eines zweidimensionalen Messbereichs erfasst. Durch das Vorsehen einer zweiten Messfläche, welche in einem Winkel größer als 0 Grad zur ersten Messfläche steht, kann ein Messbereich entlang einer weiteren Messfläche (zweite Messfläche) und somit ein sogenannter 2,5 dimensionaler Messbereich erfasst werden. Vorzugsweise ist der Winkel zwischen erster und zweiter Messfläche größer als 45 Grad, besonders bevorzugterweise zwischen 45 und 120 Grad, sowie ganz besonders bevorzugterweise 90 Grad.

Dadurch, dass für die Sensorvorrichtung eine zweite und insbesondere statisch ausgebildete Ablenkeinheit vorgesehen ist, kann der Messbereich des verwendeten optoelektronischen Sensors in eine weitere Dimension (entlang einer weiteren Messfläche) erweitert werden. Dabei werden die Messstrahlen in eine weitere, beispielsweise senkrecht zur ursprünglichen Messfläche, stehende Richtung abgelenkt. Durch die Verwendung von zwei Messflächen, wobei die zweite Messfläche mittels einer statischen, das heißt feststehenden, zweiten Ablenkeinheit aufgespannt wird, können Messdaten in beiden Flächen gleichzeitig erfasst und ermittelt werden. Durch die Realisierung einer zweiten Messfläche mittels nicht rotierender Teile wird sowohl die Zeit der Messaufnahme verkürzt als auch die Anzahl und die Intensität der Lageänderung reduziert.

Ferner ermöglicht die erfindungsgemäß vorgeschlagene Sensorvorrichtung den Einsatz eines bereits bekannten Laserscanners als optoelektronischen Sensor. Mechanische Einflüsse, wie etwa eine Übertragung von Motorschwingungen auf die Sensoreinheit, werden dadurch minimiert, da keine rotierenden Teile für die zweite Ablenkeinheit vorgesehen sind. Des Weiteren sind keine zusätzlichen Lichtquellen, beispielsweise Laserdioden, sowie keine zusätzlichen rotierende Spiegel erforderlich, wodurch eine leichte Bauweise der Sensorvorrichtung erreicht wird. Die erfindungsgemäß vorgeschlagene Sensorvorrichtung ist somit insbesondere für den Flugbetrieb mit mobilen Flugeinheiten, beispielsweise autonomen Flugeinheiten, geeignet.

Vorzugsweise weist der optoelektronische Sensor einen Lichtempfänger zum Empfangen eines reflektierten Messstrahls auf. Der von der Lichtquelle erzeugte und von beiden Ablenkeinheiten (erste und zweite Ablenkeinheit) abgelenkte Lichtstrahl bzw. Messstrahl wird von Objekten bzw. Hindernissen im Messbereich bzw. Messraum zumindest teilweise reflektiert. Die reflektierte Strahlung kehrt als reflektierter Messstrahl zurück zur Sensorvorrichtung und wird mittels des bevorzugterweise vorgesehenen Lichtempfängers aufgenommen. Zur Auswertung der Informationen ist ferner bevorzugterweise eine entsprechende Auswerteeinheit vorgesehen. Der Lichtempfänger dient somit als Rezeptor bzw. Sensor der reflektierten Messstrahlen. Unter Lichtempfänger ist im Sinne der vorliegenden Erfindung eine Lichtempfänger- bzw. Sensoreinheit zu verstehen. Diese kann aus einem Sensor selbst sowie auch zusätzlicher bzw. weiterer Ablenkeinheiten, beispielsweise Spiegel, zur Weiterleitung des reflektierten Lichtstrahls auf den Sensor bestehen.

Bevorzugterweise ist die zweite Ablenkeinheit beabstandet zur ersten Ablenkeinheit sowie besonders bevorzugterweise beabstandet zum gesamten optoelektronischen Sensor angeordnet. Somit ist die zweite Ablenkeinheit als externe Anordnung zum optoelektronischen Sensor in oder an der Sensorvorrichtung vorgesehen. Dies ermöglicht insbesondere die Verwendung eines herkömmlichen optoelektronischen Sensors, beispielsweise Laserscanners. Der herkömmliche optoelektronische Sensor muss intern somit nicht verändert werden, sondern die zweite Ablenkeinheit kann extern und beabstandet zum optoelektronischen Sensor in geeigneter Weise angeordnet werden.

Des Weiteren ist bevorzugterweise vorgesehen, dass die zweite Ablenkeinheit eine reflektierende Oberfläche aufweist. Beispielsweise kann die zweite Ablenkeinheit als Spiegel ausgebildet sein.

Um eine Reflektion möglichst nahe der Totalreflektion zu erreichen, ist ferner vorzugsweise vorgesehen, dass die Oberfläche der zweiten Ablenkeinheit zumindest bereichsweise beschichtet bzw. bedampft ist. Bevorzugterweise ist hierfür eine aluminiumaufweisende, sowie besonders bevorzugterweise silberaufweisende oder goldaufweisende, Schicht bzw. Bedampfung vorgesehen. Um eine möglichst geglättete Oberfläche zu erlangen, ist ferner vorzugsweise vorgesehen, dass die Oberfläche der zweiten Ablenkeinheit vor Beschichtung bzw. Bedampfung poliert wird.

Die zweite Ablenkeinheit weist des Weiteren bevorzugterweise eine gekrümmte und/oder gewölbte Oberfläche auf. Dadurch wird erreicht, dass durch die zweite Ablenkeinheit die Messstrahlen nicht nur in einer weiteren Richtung abgelenkt werden, sondern die Messstrahlen bei Auftreffen auf die gewölbte bzw. gekrümmte Oberfläche der zweiten Ablenkeinheit aufgefächert werden. Von dem maximalen Öffnungswinkel bzw. Scanwinkel des optoelektronischen Sensors wird ein Teil direkt zur Entfernungsmessung in der originären Fläche, das heißt entlang der ersten Messfläche, sowie ein weiterer Teil durch Umlenkung der Messstrahlen mittels der zweiten Ablenkeinheit in einer weiteren Fläche, das heißt entlang der zweiten Messfläche, genutzt. Das bedeutet, dass der Messbereich der ursprünglichen Messebene (erste Messfläche) bei Verwendung einer zweiten Ablenkeinheit mit gewölbter bzw. gekrümmter Oberfläche kleiner wird, da ein Teil der Messstrahlen abgelenkt wird und eine zweite Messebene (Messfläche) aufspannt. Ein Teil der Messstrahlen wird somit aufgefächert und entlang der zweiten Messfläche ausgestrahlt. Hierdurch wird die ursprüngliche Auflösung, welche von dem optoelektronischen Sensor zur Verfügung gestellt wird, reduziert. Dafür erlaubt die Anordnung ohne Vorsehen weiterer rotierender Teile und ohne Vorsehen weiterer Laserdioden eine räumliche Messung im dreidimensionalen Bereich.

Besonders bevorzugterweise weist die zweite Ablenkeinheit eine konvex geformte Oberfläche auf. Hierunter ist zu verstehen, dass die Oberfläche der zweiten Ablenkeinheit derart gekrümmt bzw. gewölbt ist, dass der Messstrahl auf die konvexe Krümmung bzw. Wölbung auftrifft und von dieser reflektiert wird.

Der reflektierte Messstrahl kann mittels der zweiten Ablenkeinheit oder einer weiteren Ablenkeinheit hin zum Lichtempfänger abgeleitet beziehungsweise hingeleitet werden. Insbesondere dann, wenn ein Laserscanner mit einer teildurchlässigen ersten Ablenkeinheit verwendet wird, ist es möglich, den Empfänger für das reflektierte Licht in der gleichen Höhe anzuordnen wie die erste Ablenkeinheit.

Es ist aber bevorzugterweise vorgesehen, dass die Sensorvorrichtung eine dritte Ablenkeinheit aufweist, welche ebenfalls, wie die zweite Ablenkeinheit, feststehend in oder an der Sensorvorrichtung angeordnet ist. Die dritte Ablenkeinheit ist zur Ablenkung des reflektierten Messstrahls vorgesehen. Somit wird hierdurch berücksichtigt, dass die Sendefläche und die Empfangsfläche des optoelektronischen Sensors voneinander unterschiedlich angeordnet sind bzw. nicht auf einer einzigen Fläche angeordnet sind. Ein ausgesendeter Lichtstrahl bzw. Messstrahl wird in der Regel nur diffus reflektiert und trifft immer mit leichter Streuung auf den Lichtempfänger, beispielsweise Sensor. Um möglichst viele dieser reflektierten Messstrahlen auf den Lichtempfänger zu reflektieren, ist somit vorzugsweise die dritte Ablenkeinheit vorgesehen. Die dritte Ablenkeinheit ist dabei derart angeordnet, dass der reflektierte Messstrahl durch die dritte Ablenkeinheit in Richtung des Lichtempfängers abgelenkt wird. Hierfür ist die dritte Ablenkeinheit beabstandet zum Lichtempfänger sowie besonders bevorzugterweise beabstandet zum gesamten optoelektronischen Sensor angeordnet. Die dritte Ablenkeinheit, wie auch die zweite Ablenkeinheit, ist somit extern und außerhalb des optoelektronischen Sensors vorgesehen.

Vorzugsweise weist die dritte Ablenkeinheit eine gekrümmte und/oder gewölbte Oberfläche auf. Besonders bevorzugterweise ist die Oberfläche der dritten Ablenkeinheit genauso beschaffen und beschichtet wie die Oberfläche der zweiten Ablenkeinheit.

Die Sammelpunkte der zweiten Ablenkeinheit bzw. der dritten Ablenkeinheit sind auf die Lichtquelle bzw. den Lichtempfänger abgestimmt. Somit ist vorzugsweise vorgesehen, dass der Sammelpunkt der zweiten Ablenkeinheit unter Berücksichtigung der ersten Ablenkeinheit mit der Lichtquelle zusammenfällt und der Sammelpunkt der dritten Ablenkeinheit (ggfs. unter Berücksichtigung weiterer Ablenkeinheiten) mit dem Lichtempfänger zusammenfällt.

Die Oberfläche der zweiten Ablenkeinheit ist besonders bevorzugterweise in identischerweise zur Oberfläche der dritten Ablenkeinheit gekrümmt und/oder gewölbt. Somit ist besonders bevorzugterweise vorgesehen, dass die zweite Ablenkeinheit und die dritte Ablenkeinheit identisch ausgebildete, beispielsweise identisch gekrümmte bzw. gewölbte Oberflächen aufweisen.

Zur mechanischen Anordnung bzw. Befestigung des optoelektronischen Sensors und der zweiten Ablenkeinheit weist die Sensorvorrichtung ferner bevorzugterweise eine Haltevorrichtung auf. An der Haltevorrichtung kann somit sowohl der optoelektronische Sensor sowie auch die zweite Ablenkeinheit sowie besonders bevorzugterweise auch die dritte Ablenkeinheit vormontiert und befestigt werden. Somit kann die korrekte Einstellung, Kalibrierung, Justierung und/oder Anordnung des optoelektronischen Sensors und der Ablenkeinheiten relativ zum optoelektronischen Sensor bereits bei der Vormontage vorgenommen werden. Die Sensorvorrichtung mit der Haltevorrichtung kann nach montiertem optoelektronischen Sensor und montierter zweiter Ablenkeinheit in einfacher Weise beispielsweise an einem unbemannten Luftfahrzeug angeordnet werden. Eine Ausrichtung der Ablenkeinheiten in Bezug auf den optoelektronischen Sensor ist zu diesem Zeitpunkt nicht mehr notwendig.

Erfindungsgemäß ist ferner eine mobile Messdatenerfassungseinheit mit mindestens einer Sensorvorrichtung gemäß einem der vorhergehenden Ansprüche vorgesehen.

Vorzugsweise ist die mobile Messdatenerfassungseinheit als unbemanntes Luftfahrzeug ausgebildet. Die bevorzugterweise als unbemanntes Luftfahrzeug ausgebildete mobile Messdatenerfassungseinheit kann besonders bevorzugterweise mehrere, beispielsweise vier, Sensorvorrichtungen gemäß einem der Ansprüche 1 bis 12 aufweisen.

### Kurze Beschreibung der Zeichnungen

Die Erfindung wird im Folgenden anhand bevorzugter Ausführungsformen beispielhaft erläutert.

Es zeigen schematisch:
- Fig. 1a und b:: eine schematische Darstellung der Messdatenerfassung entlang zweier Messebenen,
- Fig. 2:: eine Sensorvorrichtung mit an einer Haltevorrichtung befestigtem optoelektronischem Sensor und zwei Ablenkeinheiten, und
- Fig. 3:: eine mobile Messdatenerfassungseinheit.

### Bevorzugte Ausführungsformen der Erfindung

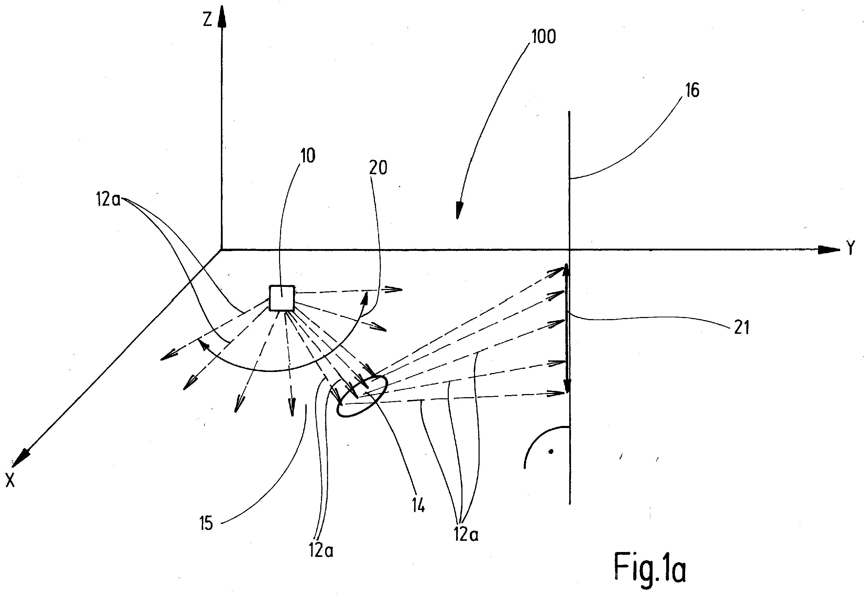

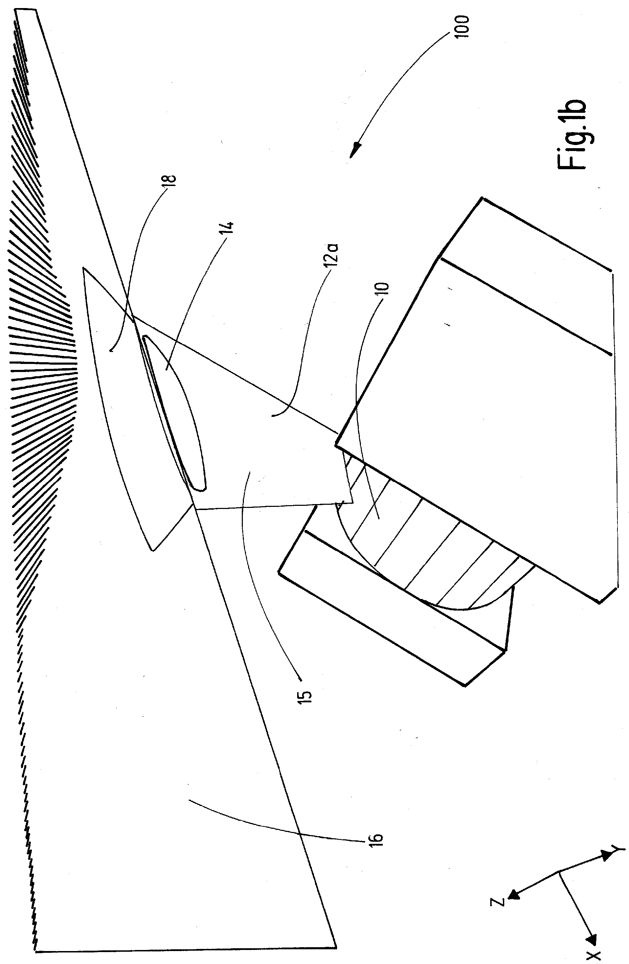

In Figur 1a und 1b ist eine schematische Darstellung der Messdatenerfassung entlang einer ersten Messebene 15 und einer zweiten Messebene 16 gezeigt. Die Sensorvorrichtung 100 strahlt Messstrahlen 12a mittels einer Lichtquelle 11 und einer ersten Ablenkeinheit 13 entlang bzw. auf einer ersten Messebene 15 aus. Die erste Ablenkeinheit 13 (in Figur 1a und 1b nicht gezeigt) ist dabei als rotierender Spiegel ausgebildet und ermöglicht einen relativ großen Öffnungswinkel bzw. Scanwinkel.

Die zweite Ablenkeinheit 14 ist beabstandet zum optoelektronischen Sensor 10 angeordnet. Eine Haltevorrichtung 19 ist in Figur 1a und 1b nicht gezeigt. Die Oberfläche der zweiten Ablenkeinheit 14 ist gewölbt und derart konvex geformt, dass der Messstrahl 12a vom optoelektronischen Sensor 10 auf die Wölbung der Oberfläche der zweiten Ablenkeinheit 14 auftrifft. Aufgrund der speziellen Ausgestaltung der Oberfläche der zweiten Ablenkeinheit 14 werden die Messstrahlen 12a nicht nur in die zweite Messebene 16 abgeleitet, sondern aufgefächert. In dem in Figur 1a und 1b gezeigten Beispiel ist die zweite Ablenkeinheit 14 derart ausgebildet, dass die erste Messebene 15 und die zweite Messebene 16 senkrecht zueinander stehen.

Der Öffnungswinkel bzw. maximale Scanwinkel des optoelektronischen Sensors 10 kann beispielsweise 270 Grad bei einer Reichweite von 30 m betragen. Die maximale Auflösung kann beispielsweise 0,25 Grad und die maximale Scanfrequenz bei 40 Hz liegen. Von dem maximalen Öffnungswinkel bzw. Scanwinkel des optoelektronischen Sensors 10 wird ein Teil direkt zur Entfernungsmessung in der originären Ebene, das heißt in der ersten Messebene 15, genutzt. Ein weiterer Teil wird durch Umlenkung der Messstrahlen 12a mittels der zweiten Ablenkeinheit 14 in einer anderen Ebene, das heißt der zweiten Messebene 16, genutzt. Dabei ist die zweite Ablenkeinheit 14 bzw. deren Oberfläche derart gekrümmt bzw. gewölbt, dass der Sammelpunkt der zweiten Ablenkeinheit 14 unter Berücksichtigung der ersten Ablenkeinheit 13 mit der Lichtquelle 11 des optoelektronischen Sensors 10 zusammenfällt. Bei diesem Beispiel wird die relativ hohe Auflösung des Öffnungswinkels bzw. maximalen Scanwinkels ausgenutzt, um eine hinreichende Abdeckung zu gewährleisten. Dazu werden die Messstrahlen 12a eines Scanwinkelbereichs von circa 45 Grad (der ursprünglichen 270 Grad) und einer Auflösung von 0,25 Grad pro Schritt so umgelenkt, dass eine Entfernungsmessung in einem Winkelbereich von 180 Grad mit einer Auflösung von 1 Grad pro Schritt erreicht wird.

Der reflektierte Messstrahl 12b (in Figur 1a und 1b der Übersicht halber nicht gezeigt) wird über eine dritte Ablenkeinheit 18 (in Figur 1a und 1b nicht gezeigt) zum optoelektronischen Sensor 10 bzw. zum Lichtempfänger 17 des optoelektronischen Sensors 10 weitergeleitet. Dort werden die Messdaten ausgewertet.

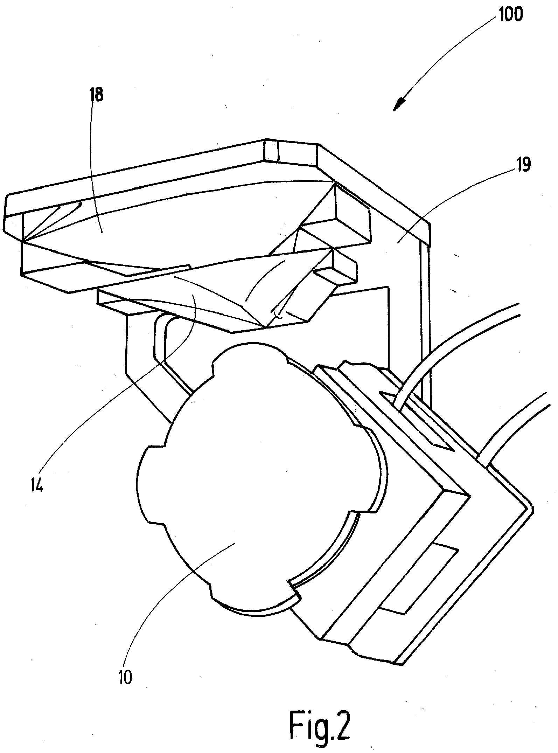

Figur 2 zeigt einen beispielhaften Aufbau einer Sensorvorrichtung 100. Dabei sind der optoelektronische Sensor 10 sowie die zweite Ablenkeinheit 14 und die dritte Ablenkeinheit 18 mechanisch an einer Haltevorrichtung 19 befestigt. Die zweite Ablenkeinheit 14 und die dritte Ablenkeinheit 18 sind mit polierten und konvex gewölbten Oberflächen ausgebildet sowie mit einer silberaufweisenden Schicht versehen. Der optoelektronische Sensor 10 beinhaltet die Lichtquelle 11 sowie die erste Ablenkeinheit 13 und einen Lichtempfänger 17.

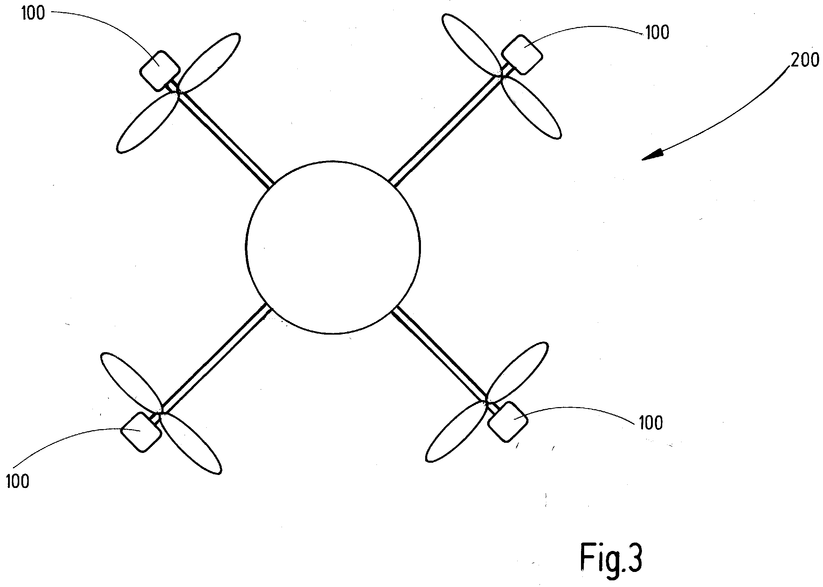

Figur 3 zeigt beispielhaft schematisch eine mobile Datenerfassungseinheit 200 in Form eines unbemannten Luftfahrzeugs. An jedem der Arme des unbemannten Luftfahrzeugs ist eine Sensorvorrichtung 100 aus Figur 2 angeordnet. Es könnte alternativerweise auch nur eine einzige Sensorvorrichtung 100 an der mobilen Datenerfassungseinheit 200, beispielsweise zentral unterhalb der mobilen Datenerfassungseinheit 200, angeordnet sein. Ferner sind anderweitig alternative Anordnungen möglich.

### Bezugszeichenliste

- 100: Sensorvorrichtung
- 200: mobile Messdatenerfassungseinheit

- 10: optoelektronischer Sensor
- 11: Lichtquelle
- 12a: Messstrahl
- 12b: reflektierter Messstrahl
- 13: erste Ablenkeinheit
- 14: zweite Ablenkeinheit
- 15: erste Messfläche
- 16: zweite Messfläche
- 17: Lichtempfänger
- 18: dritte Ablenkeinheit
- 19: Haltevorrichtung
- 20: Scanwinkel auf der ersten Messfläche
- 21: Scanwinkel auf der zweiten Messfläche

## Patentansprüche

1. Sensorvorrichtung (100) mit einem optoelektronischen Sensor (10), wobei der optoelektronische Sensor (10) eine Lichtquelle (11) zur Erzeugung eines Messstrahls (12a) aufweist, wobei der optoelektronische Sensor (10) ferner eine erste Ablenkeinheit (13) zur Ablenkung des Messstrahls (12a) entlang einer ersten Messfläche (15) aufweist, wobei zur Erweiterung eines Messbereichs die Sensorvorrichtung (100) eine zweite Ablenkeinheit (14) aufweist,
**dadurch gekennzeichnet,**
**dass** die zweite Ablenkeinheit (14) feststehend sowie hinter der ersten Ablenkeinheit (13) derart angeordnet ist, dass der von der ersten Ablenkeinheit (13) abgelenkte Messstrahl (12a) zumindest bereichsweise auf die zweite Ablenkeinheit (14) trifft und von dieser entlang einer zweiten Messfläche (16) abgelenkt wird.

2. Sensorvorrichtung (100) gemäß Anspruch 1,
**dadurch gekennzeichnet,**
**dass** der optoelektronische Sensor (10) ferner einen Lichtempfänger (17) zum Empfang eines reflektierten Messstrahls (12b) aufweist.

3. Sensorvorrichtung (100) gemäß Anspruch 1 oder 2,
**dadurch gekennzeichnet,**
**dass** die zweite Ablenkeinheit (14) beabstandet zur ersten Ablenkeinheit (13) angeordnet ist.

4. Sensorvorrichtung (100) gemäß einem der vorhergehenden Ansprüche,
**dadurch gekennzeichnet,**
**dass** die zweite Ablenkeinheit (14) eine reflektierende Oberfläche aufweist.

5. Sensorvorrichtung (100) gemäß Anspruch 4,
**dadurch gekennzeichnet,**
**dass** die Oberfläche der zweiten Ablenkeinheit (14) zumindest bereichsweise durch eine silberaufweisende oder goldaufweisende Schicht ausgebildet ist.

6. Sensorvorrichtung (100) gemäß einem der vorhergehenden Ansprüche,
**dadurch gekennzeichnet,**
**dass** die zweite Ablenkeinheit (14) eine gekrümmte und/oder gewölbte Oberfläche aufweist.

7. Sensorvorrichtung (100) gemäß Anspruch 6,
**dadurch gekennzeichnet,**
**dass** die zweite Ablenkeinheit (14) eine konvex geformte Oberfläche aufweist.

8. Sensorvorrichtung (100) gemäß einem der Ansprüche 2 bis 7,
**dadurch gekennzeichnet,**
**dass** die Sensorvorrichtung (100) eine dritte Ablenkeinheit (18) aufweist, welche feststehend sowie vor dem Lichtempfänger (17) derart angeordnet ist, dass der reflektierte Messstrahl (12b) durch die dritte Ablenkeinheit (18) in Richtung des Lichtempfängers (17) abgelenkt wird.

9. Sensorvorrichtung (100) gemäß Anspruch 8,
**dadurch gekennzeichnet,**
**dass** die dritte Ablenkeinheit (18) eine gekrümmte und/oder gewölbte Oberfläche aufweist.

10. Sensorvorrichtung (100) gemäß einem der Ansprüche 8 oder 9,
**dadurch gekennzeichnet,**
**dass** ein Sammelpunkt der zweiten Ablenkeinheit (14) unter Berücksichtigung der ersten Ablenkeinheit (13) mit der Lichtquelle (11) zusammenfällt und ein Sammelpunkt der dritten Ablenkeinheit (18) (ggfs. unter Berücksichtigung weiterer Ablenkeinheiten) mit dem Lichtempfänger (17) zusammenfällt.

11. Sensorvorrichtung (100) gemäß der Ansprüche 6 und 9,
**dadurch gekennzeichnet,**
**dass** die Oberfläche der zweiten Ablenkeinheit (14) in identischer Weise zur Oberfläche der dritten Ablenkeinheit (18) gekrümmt und/oder gewölbt ist.

12. Sensorvorrichtung (100) gemäß einem der vorhergehenden Ansprüche,
**dass** die Sensorvorrichtung (100) eine Haltevorrichtung (19) zur mechanischen Anordnung des optoelektronischen Sensors (10) und der zweiten Ablenkeinheit (14) aufweist.

13. Mobile Messdatenerfassungseinheit (200) mit mindestens einer Sensorvorrichtung (100) gemäß einem der vorhergehenden Ansprüche.

14. Mobile Messdatenerfassungseinheit (200) gemäß Anspruch 13,
**dadurch gekennzeichnet,**
**dass** die mobile Messdatenerfassungseinheit (200) als unbemanntes Luftfahrzeug ausgebildet ist.
